# EUROPEAN PATENT APPLICATION

(11) **EP 4 848 458 A1**
(43) Date of publication of application: **02.12.2026**
(21) Application number: 24943086.9
(22) Date of filing: 06.08.2024
(51) Int. Cl.: H01M 50/503, H01M 50/528, H01M 50/213

(54) **BATTERY CELL, BATTERY, AND ELECTRICAL DEVICE**

(30) Priority: 13.06.2024 CN 202421351283 U
(71) Applicant: Contemporary Amperex Technology Co., Limited, Ningde, Fujian 352100 (CN)
(72) Inventor: WU, Guangjin, Ningde, Fujian 352100 (CN); GUO, Zhijun, Ningde, Fujian 352100 (CN); MA, Ruoyan, Ningde, Fujian 352100 (CN); XIE, Chengbin, Ningde, Fujian 352100 (CN); SHI, Shengyun, Ningde, Fujian 352100 (CN)
(74) Representative: Ziebig Hengelhaupt Intellectual Property Attorneys Patentanwaltskanzlei PartGmbB
(86) International application number: PCT/CN2024/110155
(87) International publication number: WO 2025/255927

(57) **Abstract**

The present application provides a battery cell, a battery and an electrical device. The battery cell comprises a casing, an electrode terminal, an electrode assembly, and a current collecting member. The electrode terminal is provided on the casing. The electrode assembly is accommodated in the casing, and the end of the electrode assembly facing the electrode terminal is provided with a first tab. The current collecting member is accommodated in the casing and disposed on the side of the first tab facing the electrode terminal; the current collecting member comprises a first current collecting portion and a second current collecting portion connected to the first current collecting portion; the first current collecting portion is welded to the electrode terminal; the second current collecting portion is connected to the tab; and the thickness of the first current collecting portion is greater than that of the second current collecting portion.

## Description

### CROSS-REFERENCE TO RELATED APPLICATION

The present application claims priority to Chinese Patent Application No. 202421351283.X filed on June 13, 2024 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools.

In the development of battery technologies, how to improve the reliability of battery cells is a research direction in the battery technologies.

### SUMMARY

The present application provides a battery cell, a battery, and an electric device, which can improve the reliability of the battery cell.

In a first aspect, embodiments of the present application provide a battery cell. The battery cell includes a shell, an electrode terminal, an electrode assembly, and a current collecting member. The electrode terminal is disposed on the shell. The electrode assembly is accommodated in the shell, where an end, facing the electrode terminal, of the electrode assembly is provided with a first tab. The current collecting member is accommodated in the shell and disposed on a side, facing the electrode terminal, of the first tab; the current collecting member includes a first current collecting part and a second current collecting part connected to the first current collecting part, the first current collecting part is welded to the electrode terminal, the second current collecting part is connected to the tab, and a thickness of the first current collecting part is greater than a thickness of the second current collecting part.

The second current collecting part has a smaller thickness relative to the first current collecting part, and can be deformed to adapt to the shape of the first tab, thereby reducing a gap between the second current collecting part and the first tab and improving the connection strength between the current collecting member and the first tab. The first current collecting part has a larger thickness relative to the second current collecting part. When the first current collecting part and the electrode terminal are welded, the first current collecting part is not easily melted through, thereby reducing the risk of poor welding and improving the connection strength between the first current collecting part and the electrode terminal. By using the first current collecting part with a relatively large thickness, the current passage capacity between the current collecting member and the electrode terminal can be improved.

In some embodiments, the second current collecting part is disposed around the first current collecting part, such that the connection area between the second current collecting part and the first tab can be increased, and the current passage capacity can be improved.

In some embodiments, the first current collecting part is welded to the electrode terminal and forms a first welded part. In a thickness direction of the current collecting member, a dimension of a portion, formed on the first current collecting part, of the first welded part is less than the thickness of the first current collecting part. When the current collecting member and the first current collecting part are welded, the first current collecting part is not melted through, thereby improving the welding effect.

In some embodiments, in the thickness direction of the current collecting member, the dimension of the portion, formed on the first current collecting part, of the first welded part is greater than the thickness of the second current collecting part. The first welded part has a relatively large depth of fusion in the thickness direction, thereby improving the connection strength and the current passage capacity between the current collecting member and the electrode terminal.

In some embodiments, a Brinell hardness of the second current collecting part is higher than a Brinell hardness of the first current collecting part. The second current collecting part has a higher hardness than the first current collecting part. During processes such as production and transportation of the current collecting member, the risk of damage to and deformation of the second current collecting part is relatively low.

In some embodiments, the thickness of the first current collecting part is 1.2 to 3 times the thickness of the second current collecting part, so as to improve the connection strength and the current passage capacity between the first current collecting part and the electrode terminal, and reduce the loss of the energy density of the battery cell caused by thickening of the first current collecting part.

In some embodiments, at least a portion of the first current collecting part protrudes from a surface, facing the electrode terminal, of the second current collecting part and abuts against the electrode terminal. The first current collecting part protrudes from the second current collecting part in a direction toward the electrode terminal, so as to reduce the risk of contact between the second current collecting part and the electrode terminal, thereby preventing the second current collecting part from interfering with the contact between the first current collecting part and the electrode terminal to a certain extent.

In some embodiments, in a thickness direction of the current collecting member, the second current collecting part is spaced apart from the electrode terminal, thereby reducing the risk that the second current collecting part interferes with the contact between the first current collecting part and the electrode terminal.

In some embodiments, a side, facing the current collecting member, of the electrode terminal is provided with a first recess, and at least a portion of the first current collecting part is accommodated in the first recess and abuts against a bottom surface of the first recess. The first recess can accommodate the at least a portion of the first current collecting part, thereby reducing the space occupied by the electrode terminal and the current collecting member in the thickness direction, providing the space utilization rate, and improving the energy density of the battery cell. When the electrode terminal and the current collecting member are assembled, the first recess can also locate the first current collecting part, thereby reducing the assembly difficulty and improving the assembly efficiency.

In some embodiments, in a thickness direction of the current collecting member, a height by which the first current collecting part protrudes from a surface, facing the electrode terminal, of the second current collecting part is 1.2 to 2 times a depth of the first recess. By setting the ratio of the height to the depth to be greater than or equal to 1.2, a gap can be reserved between the second current collecting part and the electrode terminal, thereby reducing over-constraint. By setting the ratio of the height to the depth to be less than or equal to 2, the waste of space can be reduced, thereby improving the space utilization rate.

In some embodiments, in a radial direction of the current collecting member, a gap is provided between the first current collecting part and a side surface of the first recess. In the radial direction of the current collecting member, the first current collecting part is in clearance fit with the first recess, thereby reducing the difficulty of inserting the first current collecting part into the first recess, and reducing the metal particles generated by friction between the first current collecting part and the electrode terminal.

In some embodiments, a side, facing away from the current collecting member, of the electrode terminal is provided with a second recess, the electrode terminal includes a connecting part located at a bottom of the second recess, the connecting part is welded to the first current collecting part and forms a first welded part, and the first welded part is exposed to the second recess. By forming the second recess in the electrode terminal, the thickness of the connecting part can be reduced, thereby reducing the welding power required for welding the connecting part to the first current collecting part, reducing heat generation, reducing the risk of burning other members, and improving the reliability of the battery cell.

In some embodiments, a side, facing the current collecting member, of the electrode terminal is provided with a first recess, and the connecting part is formed between a bottom surface of the first recess and a bottom surface of the second recess. At least a portion of the first current collecting part is accommodated in the first recess. The first recess can accommodate at the least a portion of the first current collecting part, thereby reducing the space occupied by the electrode terminal and the current collecting member in the thickness direction, and providing the space utilization rate. By providing the first recess and the second recess on two sides of the electrode terminal, the thickness of the connecting part can be reduced, and the welding power required for welding the connecting part to the first current collecting part can be reduced.

In some embodiments, the first current collecting part is provided with a top surface abutting against the bottom surface of the first recess. In a thickness direction of the current collecting member, the bottom surface of the second recess at least partially overlaps the top surface, and a projection of an outer peripheral edge of the bottom surface of the second recess is located within a projection of the top surface. When the battery cell is discharged, current is conducted outward through the connecting part and a side wall of the second recess. By disposing the first welded part close to the outer peripheral edge of the bottom surface of the second recess, the distance between the first welded part and the side wall of the second recess can be reduced, thereby shortening the conductive path and improving the current passage capacity. The projection of the outer peripheral edge of the bottom surface of the second recess is located within the projection of the top surface. When welding is performed near the outer peripheral edge of the bottom surface of the second recess, the risk of extension of the molten pool beyond the top surface can be reduced, thereby reducing false welding and improving welding strength.

In some embodiments, a diameter of the top surface is greater than a diameter of the bottom surface of the second recess. A difference between a diameter of the bottom surface of the first recess and the diameter of the top surface is less than a difference between the diameter of the top surface and the diameter of the bottom surface of the second recess. The first current collecting part may be in clearance fit with the first recess, and the difference between the diameter of the bottom surface of the first recess and the diameter of the top surface is related to the radial position of the first current collecting part. By defining the diameter relationship among the top surface, the bottom surface of the first recess, and the bottom surface of the second recess, the outer peripheral edge of the bottom surface of the second recess can be prevented from exceeding an outer peripheral edge of the top surface, thereby reducing the risk of false welding.

In some embodiments, a thickness of the connecting part is 1 to 3 times a thickness of the first current collecting part. By setting the ratio of the thickness of the connecting part to the thickness of the first current collecting part to be greater than or equal to 1, the depth of fusion of the first welded part can be increased, and the connection strength and the current passage capacity between the connecting part and the first current collecting part can be improved. By setting the ratio of the thickness of the connecting part to the thickness of the first current collecting part to be less than or equal to 3, the welding power required for welding the connecting part to the first current collecting part is reduced, thereby reducing heat generation, reducing the risk of burning other members, and improving the reliability of the battery cell.

In some embodiments, the connecting part is provided with a first through hole, the first current collecting part is provided with a second through hole, and the first through hole and the second through hole are disposed opposite to each other in the thickness direction of the current collecting member. The battery cell further includes a first sealing member, and at least a portion of the first sealing member is disposed in the second recess and is configured to seal the first through hole.

The first through hole and the second through hole can enable the communication between the internal space of the shell and the external space of the shell during the production process of the battery cell. For example, the first through hole and the second through hole can be configured to allow injection of an electrolyte thereinto, or can be configured to discharge gas during the formation process. The first sealing member can be configured to seal the first through hole, so as to reduce the risk that external impurities enter the interior of the shell through the first through hole and the second through hole, thereby improving the reliability of the battery cell. The second recess can accommodate at least a portion of the first sealing member, thereby improving the space utilization rate.

In some embodiments, in a radial direction of the current collecting member, a hole wall of the first through hole protrudes inward from a hole wall of the second through hole. The first sealing member includes a first sealing part, a second sealing part, and a third sealing part. The first sealing part is located on an outer side of the connecting part, the second sealing part is located on an inner side of the connecting part and is at least partially accommodated in the second through hole, and the third sealing part is accommodated in the first through hole and connects the first sealing part and the second sealing part. In the thickness direction of the current collecting member, a portion of the connecting part is located between the first sealing part and the second sealing part. The connecting part can limit the third sealing part in a radial direction of the first through hole, and also limit the first sealing part and the second sealing part in the thickness direction, thereby achieving the fixation of the first sealing member and reducing the risk of detachment of the first sealing member from the connecting part. The second through hole is larger than the first through hole in the radial direction, thereby providing space for the second sealing part and facilitating the overlap between the second sealing part and the connecting part in the thickness direction.

In some embodiments, in the radial direction of the current collecting member, the second sealing part is spaced apart from the hole wall of the second through hole. In the embodiments of the present application, when the first sealing member is assembled, the risk of compression of the first current collecting part by the first sealing member can be reduced, and the deformation of the current collecting member can be reduced.

In some embodiments, a surface, facing the first tab, of the first current collecting part abuts against the first tab, and a surface, facing the first tab, of the second current collecting part abuts against the first tab. Both the first current collecting part and the second current collecting part abut against the first tab, such that the contact area between the current collecting member and the first tab can be increased, and the current passage area between the current collecting member and the first tab can be increased.

In some embodiments, the surface, facing the first tab, of the first current collecting part is flush with the surface, facing the first tab, of the second current collecting part, which can improve the uniformity of the force applied to the first tab, reduce the stress concentration, and reduce the risk of local collapse of the first tab.

In some embodiments, the first current collecting part protrudes from the surface, facing the first tab, of the second current collecting part. A surface, facing the current collecting member, of the first tab is provided with a tab groove, and a portion of the first current collecting part is accommodated in the tab groove. By disposing the first current collecting part to protrude toward the first tab, the thickness of the first current collecting part can be increased. By providing the tab groove, space can be provided for the first current collecting part, thereby reducing the additional space occupied by the first current collecting part and improving the space utilization rate.

In some embodiments, the current collecting member includes a protrusion and a third recess. The second current collecting part surrounds the protrusion, the protrusion protrudes from a surface, facing the electrode terminal, of the second current collecting part, and the third recess corresponds in position to the protrusion and is recessed relative to the surface, facing the first tab, of the second current collecting part. A bottom wall of the third recess is the first current collecting part.

By providing the protrusion and the third recess, the overall strength of the current collecting member can be increased, and the deformation of the current collecting member during the production and transportation processes can be reduced. By providing the third recess, the first current collecting part can be spaced apart from the first tab, thereby reducing the amount of heat conducted to the first tab during the process of welding the first current collecting part and the electrode terminal, reducing the risk of deformation and shrinkage of a separator of the electrode assembly due to heat, and improving the reliability of the battery cell.

In some embodiments, the current collecting member includes a protrusion and a third recess. The second current collecting part surrounds the protrusion, the protrusion protrudes from a surface, facing the electrode terminal, of the second current collecting part, and the third recess corresponds in position to the protrusion and is recessed relative to the surface, facing the first tab, of the second current collecting part. The current collecting member further includes a current collecting plate accommodated in the third recess, and the current collecting plate is fixed to a bottom wall of the third recess; the first current collecting part includes the current collecting plate and the bottom wall of the third recess.

When the electrode terminal and the bottom wall of the third recess are welded, the current collecting plate can provide a protective effect. Even if the bottom wall of the third recess is melted through, the current collecting plate can also block the molten metal and be used for welding, thereby reducing the risk of the molten metal dripping. The current collecting plate and the bottom wall of the third recess are separately formed, which can reduce the difficulty in forming the third recess and the protrusion. By accommodating the current collecting plate in the third recess, the space utilization rate can also be improved.

In some embodiments, the shell includes a shell body and an end cover, the shell body is provided with an opening, and the end cover lids the opening. The shell body includes an end wall opposite to the end cover, and the electrode terminal is disposed on the end wall.

In some embodiments, the first tab is provided in a winding manner, a portion of the first tab is bent and forms an overlapping region in an axial direction of the electrode assembly, and the overlapping region is welded to the second current collecting part. The overlapping region of the first tab is of a multi-layer structure. The overlapping region is welded to the second current collecting part, which can not only reduce the risk of false welding, but also increase the welding area between the first tab and the second current collecting part, thereby improving the current passage capacity. The thickness of the second current collecting part is relatively small, and the second current collecting part can adapt to the overlapping region through deformation, thereby reducing the gap between the second current collecting part and the first tab and reducing the risk of false welding.

In a second aspect, the embodiments of the present application provide a battery. The battery includes a plurality of battery cells according to any one of the embodiments of the first aspect.

In a third aspect, the embodiments of the present application provide an electric device. The electric device includes the battery according to any one of the embodiments of the second aspect. The battery is configured to provide electrical energy.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is an exploded schematic view of a battery according to some embodiments of the present application;
FIG. 3 is a schematic structural diagram of a battery module shown in FIG. 2;
FIG. 4 is a schematic structural diagram of a battery cell according to some embodiments of the present application;
FIG. 5 is an exploded schematic view of the battery cell shown in FIG. 4;
FIG. 6 is a cross-sectional schematic view of the battery cell shown in FIG. 4;
FIG. 7 is an enlarged schematic view of a circled portion in FIG. 6;
FIG. 8 is an enlarged view of the block A in FIG. 7;
FIG. 9 is a cross-sectional schematic view of an electrode terminal of a battery cell according to some embodiments of the present application;
FIG. 10 is a cross-sectional schematic view of a current collecting member of a battery cell according to some embodiments of the present application;
FIG. 11 is a partial cross-sectional schematic view of a battery cell according to some other embodiments of the present application;
FIG. 12 is a partial cross-sectional schematic view of a battery cell according to yet some other embodiments of the present application;
FIG. 13 is a partial cross-sectional schematic view of a battery cell according to still some other embodiments of the present application; and
FIG. 14 is a schematic diagram of an electrode assembly and a current collecting member of a battery cell before assembly according to still some other embodiments of the present application.

Reference numerals in the drawings are explained as follows:
1. vehicle; 2. battery; 3. controller; 4. motor; 5. case; 5a. first case part; 5b. second case part; 5c. accommodating space; 6. battery module; 7. battery cell;
10. electrode assembly; 11. main body part; 12. first tab; 121. tab groove; 122. overlapping region; 13. second tab;
20. shell; 21. shell body; 211. end wall; 212. side wall; 22. end cover;
30. electrode terminal; 31. first recess; 311. bottom surface of the first recess; 312. side surface of the first recess; 32. second recess; 321. bottom surface of the second recess; 33. connecting part; 331. first through hole;
40. current collecting member; 41. first current collecting part; 411, top surface; 412, second through hole; 42. second current collecting part; 43. protrusion; 44. third recess; 45. side part; 46. current collecting plate;
50. first sealing member; 51. first sealing part; 52. second sealing part; 53. third sealing part;
60. second sealing member;
W. first welded part; Z. thickness direction.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like. This is not limited in the embodiments of the present application.

The battery cell generally includes an electrode assembly. The electrode assembly includes a positive electrode and a negative electrode. During the charging and discharging process of the battery cell, active ions (such as lithium ions) are intercalated and deintercalated back and forth between the positive electrode and the negative electrode.

In some embodiments, the electrode assembly includes a separator disposed between the positive electrode and the negative electrode, and the separator can prevent a short circuit between the positive electrode and the negative electrode and allow the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.80}Co_{0.15}Al_{0.05}O₂), and modified compounds thereof.

In some embodiments, a foam metal or a foam carbon may be used as the positive electrode. The foam metal may be foam nickel, foam copper, foam aluminum, a foam alloy, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, a foam carbon, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic. The separation film may be a single-layer film or a multi-layer composite film, which is not specified. When the separation film is a multi-layer composite film, the materials of the layers may be the same or different, which is not specified. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The present application does not specifically limit the type of the electrolyte, which may be selected based on requirements. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current from the electrode assembly. The tabs include a positive electrode tab and a negative electrode tab.

In some embodiments, the battery cell may include a shell. The shell is configured to enclose components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present application.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a part of the case may become at least a part of a crossbeam and a longitudinal beam of the vehicle.

In some embodiments, the battery may be an energy storage device. The energy storage device includes an energy storage container, an energy storage electrical cabinet, and the like.

In some embodiments, the battery cell is further disposed on an electrode terminal of the shell body, and the electrode terminal is configured to be electrically connected to the tab of the electrode assembly to achieve charging and discharging of the electrode assembly. To facilitate assembly and improve the current passage capacity of the battery cell, in the battery cell, the tab of the electrode assembly is usually connected to the electrode terminal through a current collecting member.

The current collecting member usually has a relatively small thickness. In this way, when the current collecting member and the tab are assembled, the current collecting member is easily deformed to adapt to the shape of the tab, thereby reducing the gap between the current collecting member and the tab and improving the connection strength between the current collecting member and the tab. When the current collecting member and the electrode terminal are welded, the current collecting member may be melted through due to the relatively small thickness, thereby causing poor welding. In addition, the use of the current collecting member with a small thickness also affects the current passage capacity between the current collecting member and the electrode terminal.

In view of this, the embodiments of the present application provide a technical solution, which reduces the risk of the current collecting member being welded through when being welded to the electrode terminal by increasing the partial thickness of the current collecting member, thereby improving the current passage capacity between the current collecting member and the electrode terminal.

The battery cell described in the embodiments of the present application is applicable to batteries and electric devices that use batteries.

The battery cell and battery disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments will be described by taking a vehicle as an example of the electric device.

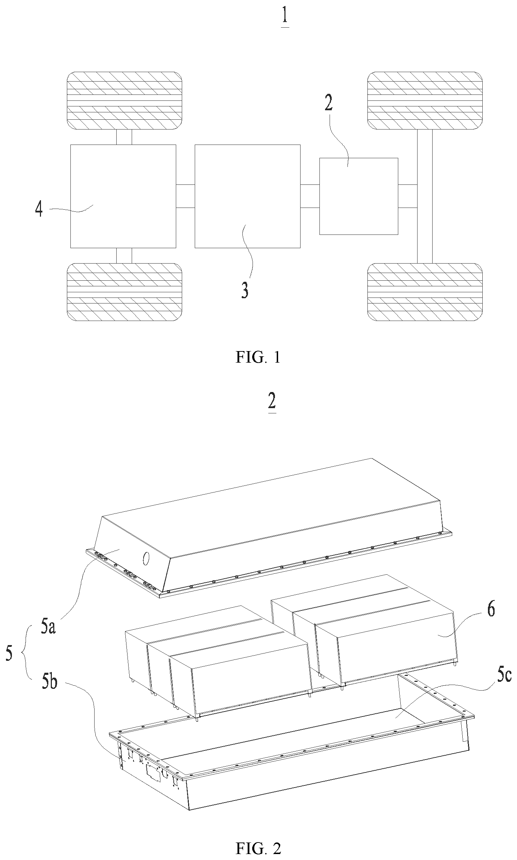

FIG. 1 is a schematic structural diagram of a vehicle according to some embodiments of the present application.

As shown in FIG. 1, a battery 2 is disposed inside a vehicle 1, and the battery 2 may be disposed at the bottom, head, or tail of the vehicle 1. The battery 2 may be configured to power the vehicle 1. For example, the battery 2 may serve as an operation power source for the vehicle 1.

The vehicle 1 may further include a controller 3 and a motor 4. The controller 3 is configured to control the battery 2 to power the motor 4, e.g., for the operation power needed by the vehicle 1 for start-up, navigation, and driving.

In some embodiments of the present application, the battery 2 may not only serve as the operation power source for the vehicle 1, but also as a driving power source for the vehicle 1 to, replacing or partially replacing fuel or natural gas, provide driving power for the vehicle 1.

FIG. 2 is an exploded schematic view of a battery according to some embodiments of the present application. As shown in FIG. 2, the battery 2 includes a case 5 and a battery cell (not shown in FIG. 2). The battery cell is accommodated in the case 5.

The case 5 is configured to accommodate the battery cell, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the battery cell. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. Certainly, the first case part 5a and the second case part 5b may be in various shapes, such as a cylinder and a rectangular parallelepiped.

To improve the sealing performance after the first case part 5a and the second case part 5b are connected, a sealing member, such as a sealant or a seal ring, may be further provided between the first case part 5a and the second case part 5b.

If the first case part 5a lids the top part of the second case part 5b, the first case part 5a may also be referred to as an upper case cover, and the second case part 5b may also be referred to as a lower case body.

In the battery 2, one or a plurality of battery cells may be provided. If a plurality of battery cells are provided, the plurality of battery cells may be connected in series, in parallel, or in series-parallel. The series-parallel connection means that both series connection and parallel connection are present for the connection among the plurality of battery cells. The plurality of battery cells may be directly connected in series, in parallel, or in series-parallel, and then the whole formed by the plurality of battery cells is accommodated in the case 5. Certainly, the situation may be that the plurality of battery cells are first connected in series, in parallel, or in series-parallel to form battery modules 6, and then the plurality of battery modules 6 are connected in series, in parallel, or in series-parallel to form a whole and accommodated in the case 5.

The battery cell may be the smallest unit constituting the battery.

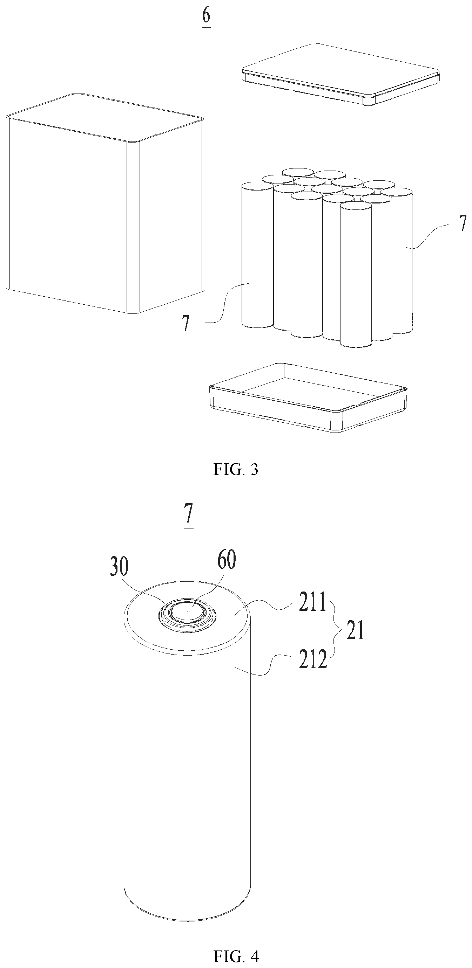

FIG. 3 is a schematic structural diagram of a battery module shown in FIG. 2.

In some embodiments, as shown in FIG. 3, a plurality of battery cells 7 are provided, and the plurality of battery cells 7 are first connected in series, in parallel, or in series-parallel to form the battery module 6. A plurality of battery modules 6 are then connected in series, in parallel, or in series-parallel to form a whole and accommodated in the case.

The plurality of battery cells 7 in the battery module 6 may be electrically connected via a busbar component to achieve parallel connection, series connection, or series-parallel connection among the plurality of battery cells 7 in the battery module 6. One or a plurality of busbar components may be provided, and each busbar component is configured to electrically connect at least two battery cells.

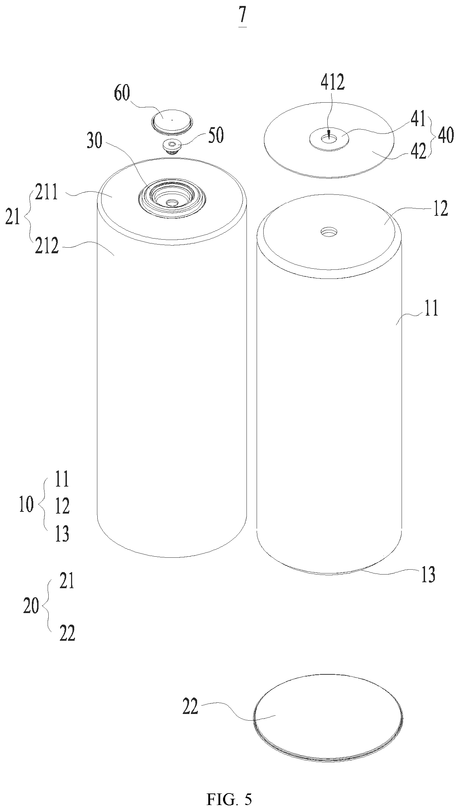

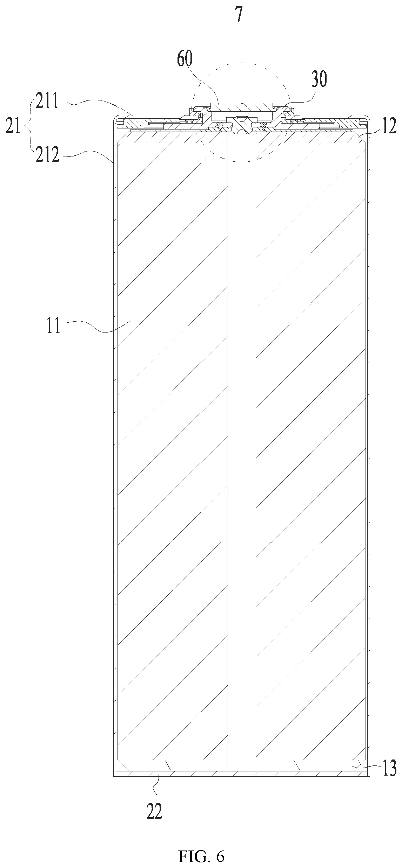

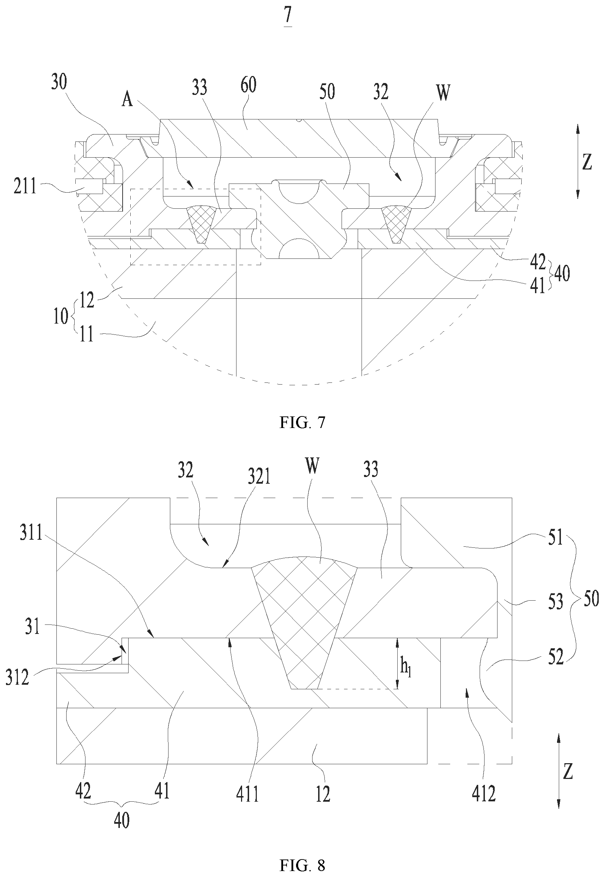

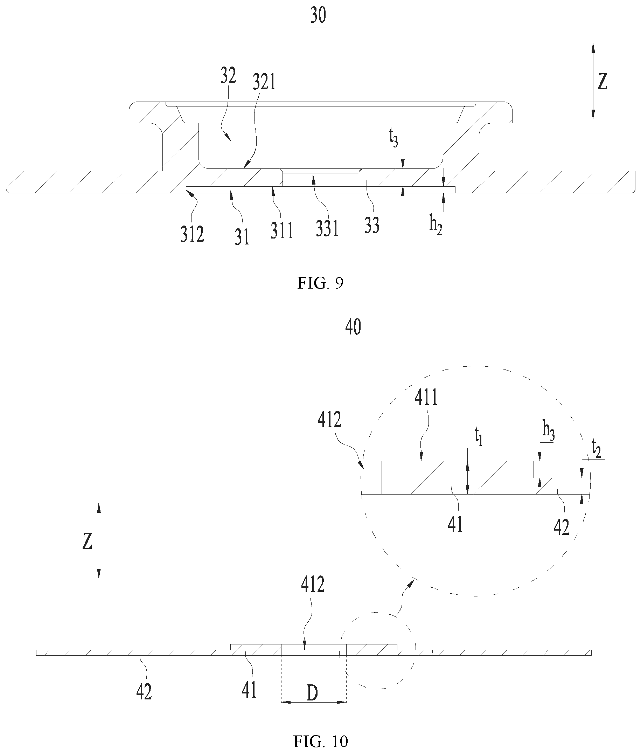

FIG. 4 is a schematic structural diagram of a battery cell according to some embodiments of the present application; FIG. 5 is an exploded schematic view of the battery cell shown in FIG. 4; FIG. 6 is a cross-sectional schematic view of the battery cell shown in FIG. 4; FIG. 7 is an enlarged schematic view of a circled portion in FIG. 6; FIG. 8 is an enlarged schematic view of the block A in FIG. 7; FIG. 9 is a cross-sectional schematic view of an electrode terminal of a battery cell according to some embodiments of the present application; FIG. 10 is a cross-sectional schematic view of a current collecting member of a battery cell according to some embodiments of the present application.

Referring to FIGs. 4 to 10, the embodiments of the present application provide a battery cell 7. The battery cell includes a shell 20 and an electrode assembly 10. At least a portion of the electrode assembly 10 is accommodated in the shell 20.

The shell 20 is of a hollow structure. An accommodating space for accommodating the electrode assembly 10 and the electrolyte is formed inside the shell. The shape of the shell 20 may be determined based on the specific shape of the electrode assembly 10. For example, if the electrode assembly 10 is of a rectangular parallelepiped structure, a rectangular parallelepiped shell may be used; if the electrode assembly 10 is of a cylinder structure, a cylinder shell may be used.

As an example, the shell 20 includes a shell body 21 and an end cover 22. The shell body 21 is provided with an opening, and the end cover 22 is configured to lid the opening.

The shell body 21 is a component configured to form the internal cavity of the battery cell 7 in combination with the end cover 22. The formed internal cavity may be used to accommodate the electrode assembly 10, the electrolyte, and other components.

The shell body 21 and the end cover 22 may be separate components. Illustratively, an opening may be formed in the shell body 21, and the end cover 22 lids the opening to form the internal cavity of the battery cell 7.

The shell body 21 may be in various shapes and dimensions, such as a rectangular parallelepiped, a cylinder, and a hexagonal prism. Specifically, the shape of the shell body 21 may be determined based on the specific shape and dimension of the electrode assembly 10. The shell body 21 may be made of a plurality of materials, such as copper, iron, aluminum, stainless steel, and aluminum alloy, which is not specifically limited in the embodiments of the present application.

The shape of the end cover 22 may be adapted to the shape of the shell body 21 to match the shell body 21. The end cover 22 and the shell body 21 may be made of the same or different materials. Optionally, the end cover 22 may be made of a material with a certain hardness and strength (e.g., copper, iron, aluminum, stainless steel, aluminum alloy, or plastic), such that the end cover 22 is not easily deformed when being compressed or collided. This provides the battery cell 7 with higher structural strength and improved reliability.

The end cover 22 is connected to the shell body 21 by welding, bonding, snap-fitting, or other methods.

The shell body 21 may have one end open, or may have two ends open. In some examples, the shell body 21 may be of a structure with one side open. One end cover 22 is provided and lids the shell body 21. In some other examples, the shell body 21 may also be of a structure with two sides open. Two end covers 22 are provided, and the two end covers 22 lid the two openings of the shell body 21, respectively.

The electrode assembly 10 is a component where the electrochemical reaction occurs in the battery cell 7. One or more electrode assemblies 10 may be accommodated in the shell body 21.

In some embodiments, the electrode assembly 10 includes a main body part 11, a first tab 12, and a second tab 13. One of the first tab 12 and the second tab 13 is a positive electrode tab, and the other is a negative electrode tab.

As an example, the electrode assembly 10 includes a positive electrode plate and a negative electrode plate. The portions of the positive electrode plate and the negative electrode plate that contain the active substance constitute the main body part 11 of the electrode assembly 10, the portion of the positive electrode plate that does not contain the active substance constitutes the positive electrode tab, and the portion of the negative electrode plate that does not contain the active substance constitutes the negative electrode tab. The positive electrode tab and the negative electrode tab may be located together at one end of the main body part 11 or respectively at two ends of the main body part 11.

During the charging and discharging process of the battery, the positive electrode active substance and the negative electrode active substance react with the electrolyte.

In some embodiments, the battery cell 7 includes an electrode terminal 30 disposed on the shell 20. The electrode terminal 30 may serve as an output electrode of the battery cell 7, and is configured to be connected to an external circuit. The electrode terminal 30 is configured to be connected to the busbar component to achieve electrical connection among the battery cells 7.

The electrode terminal 30 may be disposed on the shell body 21 or may be disposed on the end cover 22.

One or a plurality of electrode terminals 30 may be provided.

In some examples, one electrode terminal 30 is provided, and the electrode terminal 30 is electrically connected to the first tab 12. Optionally, at least a portion of the shell 20 may be electrically connected to the second tab 13. The electrode terminal 30 and the shell 20 may serve as two output electrodes of the battery cell 7, respectively.

In some other examples, two electrode terminals 30 are provided, and the two electrode terminals 30 are electrically connected to the first tab 12 and the second tab 13, respectively. The two electrode terminals 30 may serve as two output electrodes of the battery cell 7, respectively.

The electrode terminal 30 may be disposed on the shell body 21 in an insulated manner, or may be electrically connected to the shell body 21, as long as the conduction between the first tab 12 and the second tab 13 is avoided.

In some embodiments, the battery cell 7 further includes a current collecting member 40. The current collecting member 40 electrically connects the first tab 12 to the electrode terminal 30.

In some embodiments, the battery cell 7 includes a shell 20, an electrode terminal 30, an electrode assembly 10, and a current collecting member 40. The electrode terminal 30 is disposed on the shell 20. The electrode assembly 10 is accommodated in the shell 20, and one end, facing the electrode terminal 30, of the electrode assembly 10 is provided with the first tab 12. The current collecting member 40 is accommodated in the shell 20 and is disposed on a side, facing the electrode terminal 30, of the first tab 12; the current collecting member 40 includes a first current collecting part 41 and a second current collecting part 42 connected to the first current collecting part 41, the first current collecting part 41 is welded to the electrode terminal 30, the second current collecting part 42 is connected to the tab, and a thickness of the first current collecting part 41 is greater than a thickness of the second current collecting part 42.

The second current collecting part 42 may be connected to the first tab 12 by welding, abutment, bonding, or other methods to achieve the electrical connection between the current collecting member 40 and the first tab 12.

The arrangement manner of the first current collecting part 41 and the second current collecting part 42 may be flexibly configured as required. In some examples, the second current collecting part 42 is disposed around the first current collecting part 41. In some other examples, the first current collecting part 41 is disposed around the second current collecting part 42. In still some other examples, a plurality of second current collecting parts 42 are provided, and the plurality of second current collecting parts 42 are spaced apart from each other in a circumferential direction of the first current collecting part 41 and are connected to an outer peripheral edge of the first current collecting part 41.

The first current collecting part 41 and the second current collecting part 42 may be integrally formed, or may be separately formed and connected by welding or other methods.

A Brinell hardness of the second current collecting part 42 may be higher than, equal to, or lower than a Brinell hardness of the first current collecting part 41.

The ratio of the thickness of the first current collecting part 41 to the thickness of the second current collecting part 42 is greater than 1. Illustratively, the ratio of the thickness of the first current collecting part 41 to the thickness of the second current collecting part 42 is 1.1, 1.2, 1.5, 2, 2.5, 3, 3.5, 4, or 5.

The second current collecting part 42 may be in contact with the electrode terminal 30, or may not be in contact with the electrode terminal 30. The first current collecting part 41 may be in contact with the first tab 12, or may not be in contact with the first tab 12.

In the embodiments of the present application, the second current collecting part 42 has a smaller thickness relative to the first current collecting part 41, and can be deformed to adapt to the shape of the first tab 12, thereby reducing a gap between the second current collecting part 42 and the first tab 12 and improving the connection strength between the current collecting member 40 and the first tab 12. The first current collecting part 41 has a larger thickness relative to the second current collecting part 42. When the first current collecting part 41 and the electrode terminal 30 are welded, the first current collecting part 41 is not easily melted through, thereby reducing the risk of poor welding and improving the connection strength between the first current collecting part 41 and the electrode terminal 30. By using the first current collecting part 41 with a relatively large thickness, the current passage capacity between the current collecting member 40 and the electrode terminal 30 can be improved.

Compared with the solution of thickening the entire current collecting member 40, the embodiments of the present application can also reduce the space occupied by the current collecting member 40 and the weight thereof, and improve the energy density of the battery cell 7.

In some embodiments, when the electrode terminal 30 and the current collecting member 40 are assembled, the electrode terminal 30 is welded to the current collecting member 40 from the electrode terminal side.

Illustratively, a laser beam may be irradiated onto the electrode terminal 30 to achieve the welding between the electrode terminal 30 and the first current collecting part 41.

In some embodiments, in a thickness direction Z of the current collecting member 40, the first current collecting part 41 does not overlap the second current collecting part 42. The thickness of the first current collecting part 41 and the thickness of the second current collecting part 42 do not add up in the thickness direction Z, thereby reducing the maximum dimension of the current collecting member 40 in the thickness direction Z.

In some embodiments, the first tab 12 is welded to the second current collecting part 42.

Illustratively, the first tab 12 is laser-welded to the second current collecting part 42. When the first tab 12 and the second current collecting part 42 are welded, the laser beam may be irradiated onto the second current collecting part 42, and a portion of the second current collecting part 42 is fused with a portion of the first tab 12. The second current collecting part 42 needs to be melted through by laser, and the second current collecting part 42 with a relatively small thickness is easily melted through, thereby reducing the requirement for the welding power.

In some embodiments, in the thickness direction Z of the current collecting member 40, at least a portion of the first current collecting part 41 overlaps the electrode terminal 30.

In some embodiments, the shell body 21 includes an end wall 211 opposite to the end cover 22, and the electrode terminal 30 is disposed on the end wall 211.

In some embodiments, a projection of the first current collecting part 41 in the thickness direction Z is circular, square, triangular, polygonal, or in other shapes.

In some embodiments, the end wall 211 is electrically connected to the second tab 13, and the electrode terminal 30 is disposed on the end wall 211 in an insulated manner. The end wall 211 and the electrode terminal 30 may serve as two output electrodes of the battery cell 7. The end wall 211 and the electrode terminal 30 are located on the same side of the electrode assembly 10, which facilitates the connection of the plurality of battery cells 7 into a group by the busbar component.

In some embodiments, the shell body 21 further includes a side wall 212. The side wall 212 surrounds the electrode assembly 10 and is integrally formed with the end wall 211. The side wall 212 is connected to the end cover 22.

In some embodiments, the battery cell 7 is a cylindrical battery cell, and the side wall 212 is of a cylindrical structure. Alternatively, the battery cell 7 is a prismatic battery cell, and the side wall 212 is of a square tube structure.

In some embodiments, the second tab 13 is electrically connected to the end wall 211 through the side wall 212. Optionally, the side wall 212 is electrically connected to the end cover 22, and the second tab 13 is electrically connected to the end wall 211 through the end cover 22 and the side wall 212.

In some embodiments, the second current collecting part 42 is disposed around the first current collecting part 41, such that the connection area between the second current collecting part 42 and the first tab 12 can be increased, and the current passage capacity can be improved.

The first current collecting part 41 has a relatively large thickness and is located in the middle of the current collecting member 40. In this way, the overall rigidity of the current collecting member 40 can be improved, and the deformation of the current collecting member 40 during the production or transportation process can be reduced.

In some embodiments, the first current collecting part 41 is welded to the electrode terminal 30 and forms a first welded part W.

One or a plurality of first welded parts W may be provided.

The first welded part W may be a spot weld mark or a linear weld mark. The first welded part W may be a straight weld mark or a curved weld mark.

In some embodiments, the second current collecting part 42 is welded to the first tab 12 and forms a second welded part (not shown).

In some embodiments, in a thickness direction Z of the current collecting member 40, a dimension h₁ of a portion, formed on the first current collecting part 41, of the first welded part W is less than the thickness t₁ of the first current collecting part 41.

When the current collecting member 40 and the first current collecting part 41 are welded, the first current collecting part 41 is not melted through, thereby improving the welding effect.

In some embodiments, in the thickness direction Z of the current collecting member 40, the first welded part W is spaced apart from a surface, facing the first tab 12, of the first current collecting part 41. Illustratively, in the thickness direction Z of the current collecting member 40, the spacing between the first welded part W and the surface, facing the first tab 12, of the first current collecting part 41 is t₁ - h₁.

During the process of welding the electrode terminal 30 and the first current collecting part 41, molten metal is less likely to fall onto the electrode assembly 10, thereby reducing the risk of burning the electrode assembly 10 and improving the reliability of the battery cell 7.

In some embodiments, in the thickness direction Z of the current collecting member 40, the dimension h₁ of the portion, formed on the first current collecting part 41, of the first welded part W is greater than the thickness t₂ of the second current collecting part 42.

The first welded part W has a relatively large depth of fusion in the thickness direction Z, thereby improving the connection strength and the current passage capacity between the current collecting member 40 and the electrode terminal 30.

In some embodiments, a Brinell hardness of the second current collecting part 42 is higher than a Brinell hardness of the first current collecting part 41. During processes such as production and transportation of the current collecting member 40, the current collecting member 40 may be damaged or deformed due to compression by other structures. In the embodiments of the present application, although the second current collecting part 42 is thinner than the first current collecting part 41, the second current collecting part 42 has a higher hardness than the first current collecting part 41, which can reduce the risk of damage to and deformation of the second current collecting part 42.

The thickness t₁ of the first current collecting part 41 is 1.2 to 3 times the thickness t₂ of the second current collecting part 42. Optionally, t₁/t₂ is 1.2, 1.3, 1.5, 1.6, 1.8, 2.0, 2.1, 2.3, 2.5, 2.7, 2.9, or 3.

In the embodiments of the present application, t₁/t₂ is set to be greater than or equal to 1.2, so as to reduce the risk of the first current collecting part 41 being melted through during welding, and improve the connection strength and the current passage capacity between the first current collecting part 41 and the electrode terminal 30. In the embodiments of the present application, t₁/t₂ is set to be less than or equal to 3, so as to reduce the space occupied by the first current collecting part 41 and the weight thereof, and reduce the loss of the energy density of the battery cell 7 caused by thickening of the first current collecting part 41.

In some embodiments, t₁ is 0.2 mm, 0.25 mm, 0.3 mm, 0.35 mm, 0.4 mm, 0.45 mm, 0.5 mm, 0.55 mm, 0.6 mm, 0.7 mm, or 0.8 mm.

In some embodiments, t₂ is 0.1 mm, 0.15 mm, 0.2 mm, 0.25 mm, 0.3 mm, 0.35 mm, or 0.4 mm.

In some embodiments, at least a portion of the first current collecting part 41 protrudes from a surface, facing the electrode terminal 30, of the second current collecting part 42 and abuts against the electrode terminal 30.

The first current collecting part 41 protrudes from the second current collecting part 42 in a direction toward the electrode terminal 30, so as to reduce the risk of contact between the second current collecting part 42 and the electrode terminal 30, thereby preventing the second current collecting part 42 from interfering with the contact between the first current collecting part 41 and the electrode terminal 30 to a certain extent.

In some embodiments, in a thickness direction Z of the current collecting member 40, the second current collecting part 42 is spaced apart from the electrode terminal 30, thereby reducing the risk that the second current collecting part 42 interferes with the contact between the first current collecting part 41 and the electrode terminal 30.

In some embodiments, in the thickness direction Z, a gap between the second current collecting part 42 and the electrode terminal 30 is greater than or equal to 0.2t₂.

In some embodiments, a side, facing the current collecting member 40, of the electrode terminal 30 is provided with a first recess 31, and at least a portion of the first current collecting part 41 is accommodated in the first recess 31 and abuts against a bottom surface of the first recess 311.

The depth of the first recess 31 is h₂. Illustratively, h₂ may be the maximum dimension of the first recess 31 in the thickness direction Z of the current collecting member 40.

In the thickness direction Z of the current collecting member 40, a height by which the first current collecting part 41 protrudes from a surface, facing the electrode terminal 30, of the second current collecting part 42 is h₃. Illustratively, h₃ is greater than or equal to h₂.

Illustratively, in a radial direction of the current collecting member 40, the first recess 31 and the first current collecting part 41 may be in interference fit, clearance fit, or transition fit.

The first recess 31 can accommodate the at least a portion of the first current collecting part 41, thereby reducing the space occupied by the electrode terminal 30 and the current collecting member 40 in the thickness direction Z, providing the space utilization rate, and improving the energy density of the battery cell 7. When the electrode terminal 30 and the current collecting member 40 are assembled, the first recess 31 can also locate the first current collecting part 41, thereby reducing the assembly difficulty and improving the assembly efficiency.

In some embodiments, in the thickness direction Z of the current collecting member 40, the height h₃ by which the first current collecting part 41 protrudes from the surface, facing the electrode terminal 30, of the second current collecting part 42 is 1.2 to 2 times the depth h₂ of the first recess 31.

Optionally, h₃/h₂ is 1.2, 1.3, 1.5, 1.6, 1.8, or 2.

By setting h₃/h₂ to be greater than or equal to 1.2, a gap can be reserved between the second current collecting part 42 and the electrode terminal 30, thereby reducing over-constraint. By setting h₃/h₂ to be less than or equal to 2, the waste of space can be reduced, thereby improving the space utilization rate.

In some embodiments, in the radial direction of the current collecting member 40, a gap is provided between the first current collecting part 41 and a side surface 312 of the first recess.

In the radial direction of the current collecting member 40, the first current collecting part 41 is in clearance fit with the first recess 31, thereby reducing the difficulty of inserting the first current collecting part 41 into the first recess 31, and reducing the metal particles generated by friction between the first current collecting part 41 and the electrode terminal 30.

In some embodiments, a side, facing away from the current collecting member 40, of the electrode terminal 30 is provided with a second recess 32, the electrode terminal 30 includes a connecting part 33 located at the bottom of the second recess 32, the connecting part 33 is welded to the first current collecting part 41 and forms a first welded part W, and the first welded part W is exposed to the second recess 32.

The second recess 32 may be a cylindrical recess, a tapered recess, a stepped recess, or a recess in other shapes.

The connecting part 33 corresponds to at least a portion of a bottom surface of the second recess 321. The bottom surface of the second recess 321 may be a flat surface or a curved surface. Optionally, the bottom surface of the second recess 321 is a plane perpendicular to the thickness direction Z.

During welding, the laser beam is irradiated onto the connecting part 33 from an outer side; a portion of the connecting part 33 and a portion of the first current collecting part 41 are melted and form a molten pool, and the molten pool solidifies to form the first welded part W. The first welded part W is provided with a welding surface exposed to the second recess 32, and the welding surface is uneven compared with the bottom surface of the second recess 321.

By forming the second recess 32 in the electrode terminal 30, the thickness of the connecting part 33 can be reduced, thereby reducing the welding power required for welding the connecting part 33 to the first current collecting part 41, reducing heat generation, reducing the risk of burning other members, and improving the reliability of the battery cell 7.

In some embodiments, a side, facing the current collecting member 40, of the electrode terminal 30 is provided with a first recess 31, a side, facing away from the current collecting member 40, of the electrode terminal 30 is provided with a second recess 32, and a connecting part 33 is formed between a bottom surface of the first recess 311 and a bottom surface of the second recess 321. At least a portion of the first current collecting part 41 is accommodated in the first recess 31.

Illustratively, in the thickness direction Z, the bottom surface of the first recess 311 at least partially overlaps the bottom surface of the second recess 321. A region where the bottom surface of the first recess 311 and the bottom surface of the second recess 321 overlap with each other in the thickness direction Z defines the connecting part 33.

The bottom surface of the first recess 311 may be greater than, equal to, or less than the bottom surface of the second recess 321.

The first recess 31 can accommodate the at least a portion of the first current collecting part 41, thereby reducing the space occupied by the electrode terminal 30 and the current collecting member 40 in the thickness direction Z, and providing the space utilization rate. By providing the first recess 31 and the second recess 32 on two sides of the electrode terminal 30, the thickness of the connecting part 33 can be reduced, and the welding power required for welding the connecting part 33 to the first current collecting part 41 can be reduced.

In some embodiments, the first current collecting part 41 is provided with a top surface 411 abutting against the bottom surface of the first recess 311. In a thickness direction Z of the current collecting member 40, the bottom surface of the second recess 321 at least partially overlaps the top surface 411, and a projection of an outer peripheral edge of the bottom surface of the second recess 321 is located within a projection of the top surface 411.

The top surface 411 of the first current collecting part 41 may be circular, annular, polygonal, or in other shapes. The bottom surface of the first recess 311 may be circular, annular, polygonal, or in other shapes.

When the battery cell 7 is discharged, current is conducted outward through the connecting part 33 and a side wall of the second recess 32. By disposing the first welded part W close to the outer peripheral edge of the bottom surface of the second recess 321, the distance between the first welded part W and the side wall of the second recess 32 can be reduced, thereby shortening the conductive path and improving the current passage capacity. The projection of the outer peripheral edge of the bottom surface of the second recess 321 is located within the projection of the top surface 411. When welding is performed near the outer peripheral edge of the bottom surface of the second recess 321, the risk of extension of the molten pool beyond the top surface 411 can be reduced, thereby reducing false welding and improving welding strength.

In some embodiments, in the radial direction of the current collecting member 40, an outer peripheral edge of the top surface 411 extends beyond the outer peripheral edge of the bottom surface of the second recess 321. The portion, which extends beyond the bottom surface of the second recess 321, of the top surface 411 in the radial direction may serve as a redundant design, reducing the risk of false welding caused by assembly errors.

In some embodiments, a diameter of the top surface 411 is greater than a diameter of the bottom surface of the second recess 321. A difference between a diameter of the bottom surface of the first recess 311 and the diameter of the top surface 411 is less than a difference between the diameter of the top surface 411 and the diameter of the bottom surface of the second recess 321.

Illustratively, the top surface 411 may be annular or circular. If the top surface 411 is annular, the diameter of the top surface 411 is the outer diameter of the top surface 411.

Illustratively, the bottom surface of the second recess 321 may be annular or circular. If the bottom surface of the second recess 321 is annular, the diameter of the top surface 411 is the outer diameter of the top surface 411.

Illustratively, the bottom surface of the first recess 311 may be annular or circular. If the bottom surface of the first recess 311 is annular, the diameter of the top surface 411 is the outer diameter of the top surface 411.

The diameter of the bottom surface of the first recess 311 is greater than or equal to the diameter of the top surface 411.

The first current collecting part 41 may be in clearance fit with the first recess 31, and the difference between the diameter of the bottom surface of the first recess 311 and the diameter of the top surface 411 is related to the radial position of the first current collecting part 41. In the present application, by defining the diameter relationship among the top surface 411, the bottom surface of the first recess 311, and the bottom surface of the second recess 321, the outer peripheral edge of the bottom surface of the second recess 321 can be prevented from exceeding the outer peripheral edge of the top surface 411, thereby reducing the risk of false welding.

In some embodiments, the top surface 411 may also be a curved surface. For example, the top surface 411 is a circular arc surface.

In some embodiments, the thickness t₃ of the connecting part 33 is 1 to 3 times the thickness t₁ of the first current collecting part 41.

Optionally, t₃/t₁ is 1, 1.5, 2, 2.5, or 3.

By setting t₃/t₁ to be greater than or equal to 1, the depth of fusion of the first welded part W can be increased, and the connection strength and the current passage capacity between the connecting part 33 and the first current collecting part 41 can be improved. By setting t₃/t₁ to be less than or equal to 3, the welding power required for welding the connecting part 33 to the first current collecting part 41 is reduced, thereby reducing heat generation, reducing the risk of burning other members, and improving the reliability of the battery cell 7.

In some embodiments, the connecting part 33 is provided with a first through hole 331, the first current collecting part 41 is provided with a second through hole 412, and the first through hole 331 and the second through hole 412 are disposed opposite to each other in the thickness direction Z of the current collecting member 40.

In the thickness direction Z of the current collecting member 40, the first through hole 331 at least partially overlaps the second through hole 412.

A hole diameter of the first through hole 331 may be greater than, less than, or equal to a hole diameter of the second through hole 412.

Illustratively, the first through hole 331 extends from the bottom surface of the second recess 321 to the bottom surface of the first recess 311. The bottom surface of the first recess 311 is an annular surface where the first through hole 331 is provided, and the bottom surface of the second recess 321 is an annular surface where the first through hole 331 is provided.

In some embodiments, the first through hole 331 and the second through hole 412 can be configured to allow injection of an electrolyte into the shell 20.

In some embodiments, the battery cell 7 further includes a first sealing member 50, and at least a portion of the first sealing member 50 is disposed in the second recess 32 and is configured to seal the first through hole 331.

The first through hole 331 and the second through hole 412 can enable the communication between the internal space of the shell 20 and the external space of the shell 20 during the production process of the battery cell 7. For example, the first through hole 331 and the second through hole 412 can be configured to allow injection of an electrolyte thereinto, or can be configured to discharge gas during the formation process. The first sealing member 50 can be configured to seal the first through hole 331, so as to reduce the risk that external impurities enter the interior of the shell 20 through the first through hole 331 and the second through hole 412, thereby improving the reliability of the battery cell 7. The second recess 32 can accommodate at least a portion of the first sealing member 50, thereby improving the space utilization rate.

In some embodiments, in a radial direction of the current collecting member 40, a hole wall of the first through hole 331 protrudes inward from a hole wall of the second through hole 412.

Illustratively, the hole diameter of the first through hole 331 is less than the hole diameter of the second through hole 412.

In some embodiments, the first sealing member 50 includes a first sealing part 51, a second sealing part 52, and a third sealing part 53. The first sealing part 51 is located on an outer side of the connecting part 33, the second sealing part 52 is located on an inner side of the connecting part 33 and is at least partially accommodated in the second through hole 412, and the third sealing part 53 is accommodated in the first through hole 331 and connects the first sealing part 51 and the second sealing part 52. In the thickness direction Z of the current collecting member 40, a portion of the connecting part 33 is located between the first sealing part 51 and the second sealing part 52.

The connecting part 33 can limit the third sealing part 53 in a radial direction of the first through hole 331, and also limit the first sealing part 51 and the second sealing part 52 in the thickness direction Z, thereby achieving the fixation of the first sealing member 50 and reducing the risk of detachment of the first sealing member 50 from the connecting part 33. The second through hole 412 is larger than the first through hole 331 in the radial direction, thereby providing space for the second sealing part 52 and facilitating the overlap between the second sealing part 52 and the connecting part 33 in the thickness direction Z.

As an example, the second sealing part 52 may or may not be in contact with the hole wall of the second through hole 412.

In some embodiments, the first sealing part 51 is in contact with the bottom surface of the second recess 321. The second sealing part 52 is in contact with the bottom surface of the first recess 311.

In some embodiments, in the thickness direction Z, the second sealing part 52 does not overlap the first current collecting part 41. In the embodiments of the present application, the dimension of the first sealing member 50 in the thickness direction Z can be reduced.

In some embodiments, in the radial direction of the current collecting member 40, the second sealing part 52 is spaced apart from the hole wall of the second through hole 412.

In the embodiments of the present application, when the first sealing member 50 is assembled, the risk of compression of the first current collecting part 41 by the first sealing member 50 can be reduced, and the deformation of the current collecting member 40 can be reduced.

In some embodiments, the third sealing part 53 is in interference fit with the first through hole 331.

In some embodiments, the first sealing member 50 is made of an elastic material. For example, the material of the first sealing member 50 is rubber.

In some embodiments, the first welded part W does not overlap the first sealing part 51 in the thickness direction Z. In the embodiments of the present application, the risk of damage to the first sealing part 51 due to compression by the first welded part W can be reduced.

In some embodiments, the first welded part W surrounds the first sealing part 51.

In some embodiments, the first sealing member 50 is configured to be mounted to the connecting part 33 before the connecting part 33 and the first current collecting part 41 are welded. During welding, the first sealing member 50 can seal the first through hole 331, so as to reduce the risk of metal particles generated by welding falling onto the electrode assembly 10 through the first through hole 331, thereby improving reliability.

In some embodiments, a diameter D of the second through hole 412 is 1 to 10 times the thickness t₂ of the second current collecting part 42. By setting D/t₂ to be greater than or equal to 1, the electrolyte injection efficiency can be improved, and the deformation of the current collecting member 40 during the injection process of the electrolyte can be reduced. By setting D/t₂ to be greater than or equal to 10, the loss of the current passage area of the current collecting member 40 can be reduced.

In some embodiments, the battery cell 7 further includes a second sealing member 60. The second sealing member 60 is located on an outer side of the first welded part W, connected to the electrode terminal 30, and configured to seal the second recess 32.

The second sealing member 60 can protect the first welded part W from the outer side, thereby reducing the risk of corrosion of the first welded part W.

In some embodiments, at least a portion of the second sealing member 60 is accommodated in the second recess 32, thereby improving the space utilization rate and reducing the maximum dimension of the battery cell 7.

In some embodiments, the second sealing member 60 is fixed to a side wall of the second recess 32.

In some embodiments, the second sealing member 60 is welded to the side wall of the second recess 32.

In some embodiments, the side wall of the second recess 32 is provided with a step surface, and the second sealing member 60 abuts against the step surface. The step surface can support the second sealing member 60.

In some embodiments, in the thickness direction Z of the current collecting member 40, the first sealing member 50 is spaced apart from the second sealing member 60.

In some embodiments, the electrode terminal 30 is configured to be directly connected to a busbar component. For example, the electrode terminal 30 is configured to be welded to the busbar component. Alternatively, the second sealing member 60 is a conductive member, the electrode terminal 30 is connected to the busbar component through the second sealing member 60, and the second sealing member 60 may be configured to be welded to the busbar component.

In some embodiments, a surface, facing the first tab 12, of the first current collecting part 41 abuts against the first tab 12, and a surface, facing the first tab 12, of the second current collecting part 42 abuts against the first tab 12.

Both the first current collecting part 41 and the second current collecting part 42 abut against the first tab 12, such that the contact area between the current collecting member 40 and the first tab 12 can be increased, and the current passage area between the current collecting member 40 and the first tab 12 can be increased.

In some embodiments, the surface, facing the first tab 12, of the first current collecting part 41 is flush with the surface, facing the first tab 12, of the second current collecting part 42, which can improve the uniformity of the force applied to the first tab 12, reduce the stress concentration, and reduce the risk of local collapse of the first tab 12.

In some embodiments, the current collecting member 40 is made by pressing a metal flat plate, a portion, which is pressed to a reduced thickness, of the metal flat plate is the second current collecting part 42, and a portion, which is not pressed, of the current collecting member 40 is the first current collecting part 41.

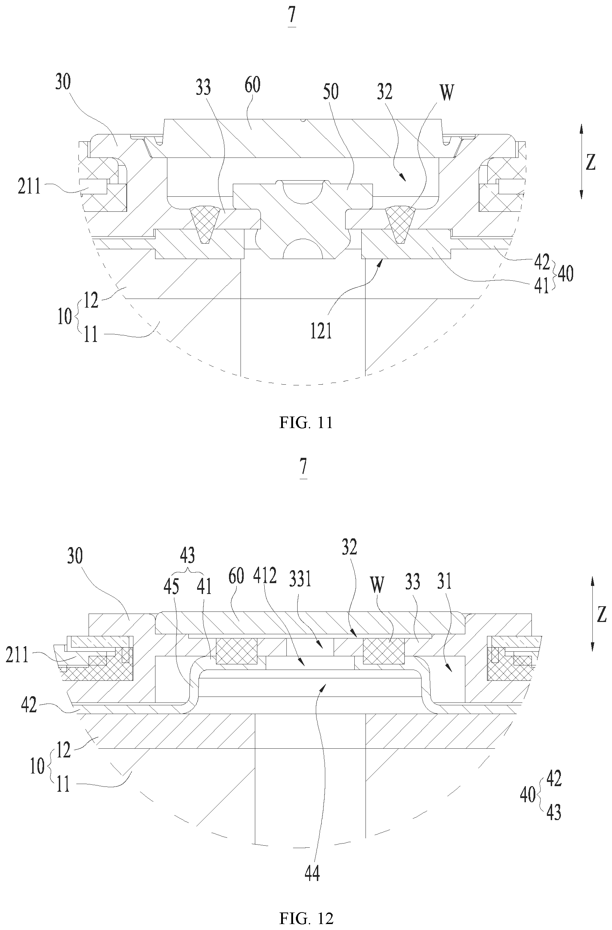

FIG. 11 is a partial cross-sectional schematic view of a battery cell according to some other embodiments of the present application.

Referring to FIG. 11, in some embodiments, the first current collecting part 41 protrudes from the surface, facing the first tab 12, of the second current collecting part 42. A surface, facing the current collecting member 40, of the first tab 12 is provided with a tab groove 121, and a portion of the first current collecting part 41 is accommodated in the tab groove 121.

By disposing the first current collecting part 41 to protrude toward the first tab 12, the thickness of the first current collecting part 41 can be increased. By providing the tab groove 121, space can be provided for the first current collecting part 41, thereby reducing the additional space occupied by the first current collecting part 41 and improving the space utilization rate.

In some embodiments, when the current collecting member 40 and the electrode assembly 10 are assembled, the first current collecting part 41 compresses the first tab 12 to form the tab groove 121. In the embodiments of the present application, the pressure between the first current collecting part 41 and the first tab 12 can be increased, thereby improving the contact stability between the first current collecting part 41 and the first tab 12 and reducing the resistance.

In some embodiments, the first current collecting part 41 protrudes from both the surface, facing the first tab 12, of the second current collecting part 42 and a surface, facing away from the first tab 12, of the second current collecting part 42.

In the thickness direction Z of the current collecting member 40, the first current collecting part 41 simultaneously protrudes from two sides of the second current collecting part 42, which can further increase the thickness of the first current collecting part 41.

In some other alternative embodiments, a surface, facing away from the first tab 12, of the first current collecting part 41 may also be flush with the surface, facing away from the first tab 12, of the second current collecting part 42.

FIG. 12 is a partial cross-sectional schematic view of a battery cell according to yet some other embodiments of the present application.

As shown in FIG. 12, in some embodiments, the current collecting member 40 includes a protrusion 43 and a third recess 44. The second current collecting part 42 surrounds the protrusion 43, the protrusion 43 protrudes from a surface, facing the electrode terminal 30, of the second current collecting part 42, and the third recess 44 corresponds in position to the protrusion 43 and is recessed relative to a surface, facing the first tab 12, of the second current collecting part 42. A bottom wall of the third recess 44 is the first current collecting part 41.

By providing the protrusion 43 and the third recess 44, the overall strength of the current collecting member 40 can be increased, and the deformation of the current collecting member 40 during the production and transportation processes can be reduced. By providing the third recess 44, the first current collecting part 41 can be spaced apart from the first tab 12, thereby reducing the amount of heat conducted to the first tab 12 during the process of welding the first current collecting part 41 and the electrode terminal 30, reducing the risk of deformation and shrinkage of a separator of the electrode assembly 10 due to heat, and improving the reliability of the battery cell 7.

In some embodiments, the protrusion 43 and the third recess 44 are formed by a stamping process.

In some embodiments, the protrusion 43 includes a side part 45 disposed around the first current collecting part 41, and the side part 45 is connected to the first current collecting part 41 and the second current collecting part 42. The side part 45 and the first current collecting part 41 define the third recess 44.

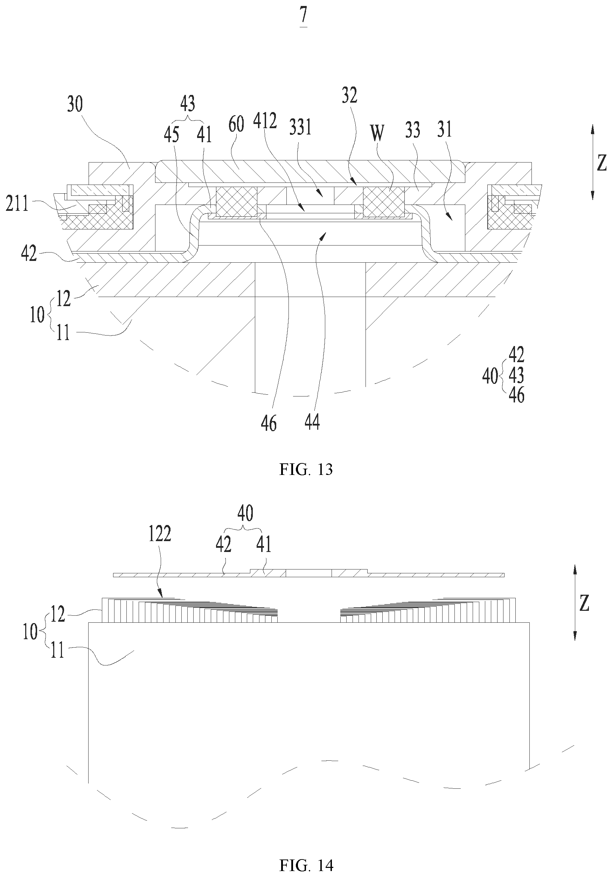

FIG. 13 is a partial cross-sectional schematic view of a battery cell according to still some other embodiments of the present application.

Referring to FIG. 13, the current collecting member 40 includes a protrusion 43 and a third recess 44. The second current collecting part 42 surrounds the protrusion 43, the protrusion 43 protrudes from a surface, facing the electrode terminal 30, of the second current collecting part 42, and the third recess 44 corresponds in position to the protrusion 43 and is recessed relative to a surface, facing the first tab 12, of the second current collecting part 42. The current collecting member 40 further includes a current collecting plate 46 accommodated in the third recess 44, and the current collecting plate 46 is fixed to a bottom wall of the third recess 44. The first current collecting part 41 includes the current collecting plate 46 and the bottom wall of the third recess 44.

The current collecting plate 46 may be connected to the bottom wall of the third recess 44 by bonding, welding, snap-fit connection, or other processes.

The thickness of the bottom wall of the third recess 44 may be greater than, equal to, or less than the thickness of the second current collecting part 42.

When the electrode terminal 30 and the bottom wall of the third recess 44 are welded, the current collecting plate 46 can provide a protective effect. Even if the bottom wall of the third recess 44 is melted through, the current collecting plate 46 can also block the molten metal and be used for welding, thereby reducing the risk of the molten metal dripping. The current collecting plate 46 and the bottom wall of the third recess 44 are separately formed, which can reduce the difficulty in forming the third recess 44 and the protrusion 43. By accommodating the current collecting plate 46 in the third recess 44, the space utilization rate can also be improved.

In some embodiments, a portion of the first welded part W is formed on the current collecting plate 46. During welding, a portion of the current collecting plate 46, a portion of the connecting part 33, and a portion of the bottom wall of the third recess 44 are melted and form a molten pool, and the molten pool solidifies to form the first welded part W.

FIG. 14 is a schematic diagram of an electrode assembly and a current collecting member of a battery cell before assembly according to still some other embodiments of the present application.

Referring to FIG. 14, in some embodiments, the first tab 12 is provided in a winding manner, a portion of the first tab 12 is bent and forms an overlapping region 122 in an axial direction of the electrode assembly 10, and the overlapping region 122 is welded to the second current collecting part 42.

Optionally, the axial direction is parallel to the thickness direction Z.

The overlapping region 122 of the first tab 12 is of a multi-layer structure. The overlapping region 122 is welded to the second current collecting part 42, which can not only reduce the risk of false welding, but also increase the welding area between the first tab 12 and the second current collecting part 42, thereby improving the current passage capacity. The thickness of the second current collecting part 42 is relatively small, and the second current collecting part can adapt to the overlapping region 122 through deformation, thereby reducing the gap between the second current collecting part 42 and the first tab 12 and reducing the risk of false welding.

Illustratively, the first tab 12 is bent by a flattening process or a smoothing process and forms the overlapping region 122.

In the axial direction, the number of overlapping layers in the overlapping region 122 of the first tab 12 is greater than or equal to 2. Optionally, the number of overlapping layers in the overlapping region 122 of the first tab 12 is greater than or equal to 5.

In some embodiments, a portion of the first tab 12 is bent inward in the radial direction of the electrode assembly 10.

According to some embodiments of the present application, the present application further provides a battery. The battery includes a plurality of battery cells 7 according to any one of the above embodiments.

According to some embodiments of the present application, the present application further provides an electric device. The electric device includes the battery cell 7 according to any one of the above embodiments. The battery cell 7 is configured to provide electrical energy for the electric device. The electric device may be any one of the aforementioned devices or systems that use the battery cell 7.

Referring to FIGs. 5 to 10, the embodiments of the present application provide a battery cell 7. The battery cell includes a shell 20, an electrode assembly 10, an electrode terminal 30, and a current collecting member 40.

The shell 20 includes a shell body 21 and an end cover 22. The shell body 21 is provided with an opening, and the end cover 22 is configured to lid the opening. The shell body 21 includes an end wall 211 opposite to the end cover 22, and the electrode terminal 30 is disposed on the end wall 211 in an insulated manner. At least a portion of the electrode assembly 10 is accommodated in the shell body 21.

The electrode assembly 10 includes a main body part 11, a first tab 12, and a second tab 13. The first tab 12 extends from an end, facing the electrode terminal 30, of the main body part 11, and the second tab 13 extends from an end, facing away from the electrode terminal 30, of the main body part 11. The first tab 12 and the second tab 13 have opposite polarities. The first tab 12 is electrically connected to the electrode terminal 30, and the second tab 13 is electrically connected to the end wall 211.

The current collecting member 40 is accommodated in the shell 20 and disposed on a side, facing the electrode terminal 30, of the first tab 12, and the current collecting member 40 includes a first current collecting part 41 and a second current collecting part 42 surrounding the first current collecting part 41. The first current collecting part 41 is welded to the electrode terminal 30 and forms a first welded part W, the second current collecting part 42 is welded to the tab and forms a second welded part, and the thickness of the first current collecting part 41 is greater than the thickness of the second current collecting part 42.

A side, facing the current collecting member 40, of the electrode terminal 30 is provided with a first recess 31, a side, facing away from the current collecting member 40, of the electrode terminal 30 is provided with a second recess 32, and a connecting part 33 is formed between a bottom surface of the first recess 311 and a bottom surface of the second recess 321.

A portion of the first current collecting part 41 protrudes from a surface, facing the electrode terminal 30, of the second current collecting part 42. At least a portion of the first current collecting part 41 is accommodated in the first recess 31 and abuts against the bottom surface of the first recess 311. The connecting part 33 is welded to the first current collecting part 41 and forms the first welded part W. The first welded part W is exposed to the second recess 32.

In a thickness direction Z of the current collecting member 40, a dimension h₁ of a portion, formed on the first current collecting part 41, of the first welded part W is less than the thickness t₁ of the first current collecting part 41 and greater than the thickness t₂ of the second current collecting part 42.

The connecting part 33 is provided with a first through hole 331, the first current collecting part 41 is provided with a second through hole 412, and the first through hole 331 and the second through hole 412 are disposed opposite to each other in the thickness direction Z of the current collecting member 40. The battery cell 7 further includes a first sealing member 50, and at least a portion of the first sealing member 50 is disposed in the second recess 32 and is configured to seal the first through hole 331.

It should be noted that, unless conflicting, the embodiments and features of the embodiments in the present application may be combined with each other.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application.

## Claims

1. A battery cell, comprising:
a shell;
an electrode terminal, disposed on the shell;
an electrode assembly, accommodated in the shell, wherein an end, facing the electrode terminal, of the electrode assembly is provided with a first tab; and
a current collecting member, accommodated in the shell and disposed on a side, facing the electrode terminal, of the first tab, wherein the current collecting member comprises a first current collecting part and a second current collecting part connected to the first current collecting part, the first current collecting part is welded to the electrode terminal, the second current collecting part is connected to the tab, and a thickness of the first current collecting part is greater than a thickness of the second current collecting part.

2. The battery cell according to claim 1, wherein the second current collecting part is disposed around the first current collecting part.

3. The battery cell according to claim 1 or 2, wherein the first current collecting part is welded to the electrode terminal and forms a first welded part;
in a thickness direction of the current collecting member, a dimension of a portion, formed on the first current collecting part, of the first welded part is less than the thickness of the first current collecting part.

4. The battery cell according to claim 3, wherein in the thickness direction of the current collecting member, the dimension of the portion, formed on the first current collecting part, of the first welded part is greater than the thickness of the second current collecting part.

5. The battery cell according to any one of claims 1 to 4, wherein a Brinell hardness of the second current collecting part is higher than a Brinell hardness of the first current collecting part.

6. The battery cell according to any one of claims 1 to 5, wherein the thickness of the first current collecting part is 1.2 to 3 times the thickness of the second current collecting part.

7. The battery cell according to any one of claims 1 to 6, wherein at least a portion of the first current collecting part protrudes from a surface, facing the electrode terminal, of the second current collecting part and abuts against the electrode terminal.

8. The battery cell according to any one of claims 1 to 7, wherein in a thickness direction of the current collecting member, the second current collecting part is spaced apart from the electrode terminal.

9. The battery cell according to any one of claims 1 to 8, wherein a side, facing the current collecting member, of the electrode terminal is provided with a first recess, and at least a portion of the first current collecting part is accommodated in the first recess and abuts against a bottom surface of the first recess.

10. The battery cell according to claim 9, wherein in a thickness direction of the current collecting member, a height by which the first current collecting part protrudes from a surface, facing the electrode terminal, of the second current collecting part is 1.2 to 2 times a depth of the first recess.

11. The battery cell according to claim 9 or 10, wherein in a radial direction of the current collecting member, a gap is provided between the first current collecting part and a side surface of the first recess.

12. The battery cell according to any one of claims 1 to 11, wherein a side, facing away from the current collecting member, of the electrode terminal is provided with a second recess, the electrode terminal comprises a connecting part located at a bottom of the second recess, the connecting part is welded to the first current collecting part and forms a first welded part, and the first welded part is exposed to the second recess.

13. The battery cell according to claim 12, wherein a side, facing the current collecting member, of the electrode terminal is provided with a first recess, and the connecting part is formed between a bottom surface of the first recess and a bottom surface of the second recess;
at least a portion of the first current collecting part is accommodated in the first recess.

14. The battery cell according to claim 13, wherein the first current collecting part is provided with a top surface abutting against the bottom surface of the first recess;
in a thickness direction of the current collecting member, the bottom surface of the second recess at least partially overlaps the top surface, and a projection of an outer peripheral edge of the bottom surface of the second recess is located within a projection of the top surface.

15. The battery cell according to claim 14, wherein
a diameter of the top surface is greater than a diameter of the bottom surface of the second recess;
a difference between a diameter of the bottom surface of the first recess and the diameter of the top surface is less than a difference between the diameter of the top surface and the diameter of the bottom surface of the second recess.

16. The battery cell according to any one of claims 12 to 15, wherein a thickness of the connecting part is 1 to 3 times the thickness of the first current collecting part.

17. The battery cell according to any one of claims 12 to 16, wherein the connecting part is provided with a first through hole, the first current collecting part is provided with a second through hole, and the first through hole and the second through hole are disposed opposite to each other in a thickness direction of the current collecting member;
the battery cell further comprises a first sealing member, and at least a portion of the first sealing member is disposed in the second recess and is configured to seal the first through hole.

18. The battery cell according to claim 17, wherein in a radial direction of the current collecting member, a hole wall of the first through hole protrudes inward from a hole wall of the second through hole;
the first sealing member comprises a first sealing part, a second sealing part, and a third sealing part, wherein the first sealing part is located on an outer side of the connecting part, the second sealing part is located on an inner side of the connecting part and is at least partially accommodated in the second through hole, and the third sealing part is accommodated in the first through hole and connects the first sealing part and the second sealing part;
in the thickness direction of the current collecting member, a portion of the connecting part is located between the first sealing part and the second sealing part.

19. The battery cell according to claim 18, wherein in the radial direction of the current collecting member, the second sealing part is spaced apart from the hole wall of the second through hole.

20. The battery cell according to any one of claims 1 to 19, wherein a surface, facing the first tab, of the first current collecting part abuts against the first tab, and a surface, facing the first tab, of the second current collecting part abuts against the first tab.

21. The battery cell according to claim 20, wherein the surface, facing the first tab, of the first current collecting part is flush with the surface, facing the first tab, of the second current collecting part.

22. The battery cell according to claim 20, wherein the first current collecting part protrudes from the surface, facing the first tab, of the second current collecting part;
a surface, facing the current collecting member, of the first tab is provided with a tab groove, and a portion of the first current collecting part is accommodated in the tab groove.

23. The battery cell according to claim 1, wherein the current collecting member comprises a protrusion and a third recess, the second current collecting part surrounds the protrusion, the protrusion protrudes from a surface, facing the electrode terminal, of the second current collecting part, and the third recess corresponds in position to the protrusion and is recessed relative to a surface, facing the first tab, of the second current collecting part;
a bottom wall of the third recess is the first current collecting part.

24. The battery cell according to claim 1, wherein the current collecting member comprises a protrusion and a third recess, the second current collecting part surrounds the protrusion, the protrusion protrudes from a surface, facing the electrode terminal, of the second current collecting part, and the third recess corresponds in position to the protrusion and is recessed relative to a surface, facing the first tab, of the second current collecting part;
the current collecting member further comprises a current collecting plate accommodated in the third recess, and the current collecting plate is fixed to a bottom wall of the third recess; the first current collecting part comprises the current collecting plate and the bottom wall of the third recess.

25. The battery cell according to any one of claims 1 to 24, wherein the shell comprises a shell body and an end cover, the shell body is provided with an opening, and the end cover lids the opening;
the shell body comprises an end wall opposite to the end cover, and the electrode terminal is disposed on the end wall.

26. The battery cell according to any one of claims 1 to 25, wherein the first tab is provided in a winding manner, a portion of the first tab is bent and forms an overlapping region in an axial direction of the electrode assembly, and the overlapping region is welded to the second current collecting part.

27. A battery, comprising a plurality of battery cells according to any one of claims 1 to 26.

28. An electric device, comprising the battery according to claim 27, wherein the battery is configured to provide electrical energy.
